(19) Europäisches Patentamt
European Patent Office
Office européen des brevets

(11) Veröffentlichungsnummer: **0 248 300**
**A2**

(12) **EUROPÄISCHE PATENTANMELDUNG**

(21) Anmeldenummer: **87107544.6**

(51) Int. Cl.4: **C08F 8/00**

(22) Anmeldetag: **23.05.87**

(30) Priorität: **27.05.86 DE 3617785**

(43) Veröffentlichungstag der Anmeldung:
**09.12.87 Patentblatt 87/50**

(84) Benannte Vertragsstaaten:
**AT BE DE FR GB IT NL**

(71) Anmelder: **BASF Aktiengesellschaft**
**Carl-Bosch-Strasse 38**
**D-6700 Ludwigshafen(DE)**

(72) Erfinder: **Bronstert, Klaus, Dr.**
**Gartenstrasse 26**
**D-6719 Carlsberg(DE)**

(54) **Homopolymere oder Blockcopolymere aus Vinylaromaten und/oder Dienen mit Ammoniumgruppen, Verfahren zur Herstellung und Verwendung derartiger Polymerer.**

(57) Die Erfindung betrifft Homopolymere oder Blockcopolymere aus Vinylaromaten und/oder Dienen und deren hydrierten Derivaten, welche Endgruppen der allgemeinen Formeln (I):

$$\sim\sim\sim\sim\sim\sim NH-(A)_X-NR^1R^2 \cdot n\ H_mS \qquad (I)$$

worin A = eine gegebenenfalls substituierte Brücke, die außer Kohlenstoff zusätzlich Stickstoff-oder Sauerstoffglieder enthalten kann, X = 0 oder 1, S = ein anorganischer oder organischer Säurerest, n = eine ganze Zahl zwischen 1 und 12, die die Zahl der verwendeten Mole Säure je Kettenende angibt, $R^1$ und $R^2$ = Wasserstoff, aliphatische oder aromatische Reste oder eine Brücke mit 3 bis 12, gegebenenfalls durch aliphatische oder aromatische Reste substituierten Kohlenstoffgliedern, m = Zahl der H-Ionen der verwendeten Säure sowie deren Herstellung aus Polymeren mit Aminoendgruppen der allgemeinen Formel (II):

$$\sim\sim\sim\sim NH-(A)_X-NR^2R^3 \qquad (II)$$

in denen $R^1$, $R^2$, A und x die oben angegebene Bedeutung haben durch Umsetzen mit 1 bis 12 Mol einer anorganischen oder organischen Säure und deren Verwendung als Formmassen, zur Modifizierung thermoplastischer Massen oder vulkanisierbarer Massen und als Klebstoffe.

EP 0 248 300 A2

# Homopolymere oder Blockcopolymere aus Vinylaromaten und/oder Dienen mit Ammoniumgruppen, Verfahren zur Herstellung und Verwendung derartiger Polymerer

Die Erfindung betrifft Homopolymere oder Blockcopolymere aus Vinylaromaten und/oder Dienen und deren hydrierte Derivate, die Endgruppen auf der Basis von mehrbasischen Aminen oder von Hydrazinen enthalten, die mit anorganischen oder organischen Säuren in kationische Endgruppen umgewandelt werden.

Es ist bereits bekannt, quarternäre Ammoniumpolymerisatkompositionen mit hohen Molekulargewichten auf der Basis von Polybutadienen herzustellen, die in ihrer Polymerisatkette eine Mehrzahl wiederkehrender quarternärer Ammoniumeinheiten aufweisen (vgl. DE-A-20 42 128). Desgleichen sind auch Polymerisate auf Basis Butadien-Styrol-Copolymerisaten bekannt, in denen statitisch im Makromolekül Ammoniumgruppen verteilt sind (vgl. EP-A-100 590, US-A-3 824 148 oder 4 481 337).

Die bekannten Polymerisate mit Ammoniumgruppen enthalten jedoch nur Alkyl-oder Arylammoniumgruppen und nicht mehrere benachbarte Ammoniumgruppen in Seitenketten, bevorzugt an den Kettenenden.

Aufgabe der vorliegenden Erfindung war es, Formmassen aus Homopolymeren von Vinylaromaten oder Dienen wie Polystyrol oder Polybutadien oder Blockcopolymeren aus Vinylaromaten und konjugierten Dienen und deren hydrierten Derivaten so abzuwandeln, daß bei gleichem Molekulargewicht deutlich bessere mechanische Eigenschaften als bei den entsprechenden nicht modifizierten Polymeren resultieren.

Diese Aufgabe wurde durch Polymere gemäß Patentansprüche 1 bis 7 sowie durch ein Verfahren zur Herstellung derartiger Polymere gemäß Patentansprüche 8 und 9 gelöst.

Unter Homopolymeren aus Vinylaromaten kommen vor allen Dingen die Polymeren aus Styrol und deren im Kern alkylierten Derivate in Betracht, ferner aus α-Methylstyrol oder aus anderen, seltener benutzten Vinylaromaten wie Vinylnaphthalin. Derartige Polymere sind dem Fachmann aus der Literatur und Praxis so geläufig, daß sich an dieser Stelle eine nähere Erläuterung erübrigt (vgl. "Ullmanns Encyclopädie der technischen Chemie", 4. Auflage, Band 19, Seiten 265 bis 295, Verlag Chemie GmbH, 1980). Üblicherweise liegen die Molekulargewichte (Gewichtsmittel $M_w$) der gebräuchlichen Styrolpolymerisate zwischen 1500 und 2.000.000, insbesondere zwischen 150.000 bis 300.000.

Auch die Blockcopolymeren aus Vinylaromaten und konjugierten Dienen sind an sich aus der Literatur seit längerem bekannt (vgl. "Ullmanns Encyclopädie der technischen Chemie", 4. Auflage, Band 13, Seiten 605 bis 609, Verlag Chemie GmbH, 1977). Als Diene sind bevorzugt Butadien, 2,3-Dimethylbutadien, Pentadien-1,3 oder Isopren zu nennen, die Molekulargewichte sind mit denen des Polystyrols vergleichbar, bevorzugt liegen die Molekulargewichte (Gewichtsmittel $M_w$) im Bereich zwischen 20.000 und 800.000. Die Homopolymeren aus Dienen wie Butadien, Isopren, 2,3-Dimethylbutadien ect. sind ebenfalls als bekannt vorauszusetzen (vgl. "Ullmanns Encyclopädie der technischen Chemie", 4. Auflage, Band 13, Seiten 602 bis 604 und 617 bis 619, Verlag Chemie GmbH, 1977). Die Molekularmassen $M_v$ der üblichen Polybutadiene liegen zwischen 200.000 und 400.000 und der üblichen Polyisoprene zwischen 1.000.000 bis 2,5.000.000.

Die hydrierten Derivate und die Herstellung dieser Produkte durch Hydrierung mit molekularem Wasserstoff in Gegenwart von Katalysatoren auf der Basis von Metallen oder Metallsalzen der 8. Gruppe des Periodensystems, entweder in homogener oder in heterogener Phase, sind in den Druckschriften: US-A-31 13 986, DE-C-24 14 872, DE-A-20 13 263, DE-A-31 06 959, DE-A-20 27 841 oder DE-A-15 95 345 beschrieben.

Bevorzugte Polymere sind Zweiblockcopolymere aus Styrol und einem Dien mit mehr als 30 Gew.% Diengehalt, Homopolydiene mit Molekulargewichten von 60.000 bis 400.000 oder Zwei-oder Dreiblock-Styrol-Dien-Copolymere mit Diengehalten zwischen 10 und 30 Gew.%, gegebenenfalls in hydrierter oder partiell hydrierter Form.

Erfindungsgemäß enthalten die Polymeren Endgruppen der allgemeinen Formel (I):

$$\sim\sim\sim\sim\sim\sim NH-(A)_X-NR^1R^2 \cdot n\ H_mS \qquad (I)$$

worin A = eine gegebenenfalls substituierte Brücke, die außer Kohlenstoff zusätzlich Stickstoff-oder Sauerstoffglieder enthalten kann, X = 0 oder 1, S = ein anorganischer oder organischer Säurerest, n = eine ganze Zahl zwischen 1 und 12, welche die Zahl der verwendeten Mole Säure je Kettenende angibt, $R^1$ und $R^2$ = Wasserstoff, aliphatische oder aromatische Reste oder eine Brücke mit 3 bis 12, gegebenenfalls durch aliphatische oder aromatische Reste substituierten Kohlenstoffgliedern und m = Zahl der Wasserstoffionen der verwendeten Säure.

Bevorzugt enthalten mehr als 50 Mol.% der Polymermoleküle die Endgruppe (I). Bevorzugt bedeuten die Reste $R^2$ Wasserstoff, $C_1$-bis $C_4$-Alkyl-und/oder Phenylreste sowie eine aus drei oder vier Kohlenstoffgliedern zusammengesetzte, gegebenenfalls phenyl-oder $C_1$-bis $C_4$-alkylsubstituierte Brücken. Bevorzugt sind auch Polymere, worin die Brücke A eine gegebenenfalls substituierte Polymethylenbrücke mit 2 bis 12 $CH_2$-Gruppen, eine cycloaliphatische Brücke oder eine Phenylenbrücke ist und worin die Brücke A Methyl-, Ethyl-, Phenyl-oder Alkylidenaminogruppen als Substituenten enthält.

Besonders bevorzugt sind Polymere welche die Endgruppen

$$\sim\sim\sim\sim\sim\sim-NH-(CH_2)_3-\overset{\oplus}{N}H_3 \cdot 1/n\ S^{n\ominus} ,$$

$$\sim\sim\sim\sim\sim\sim-\overset{\oplus}{N}H_2(CH_2)_2\overset{\oplus}{N}(CH_3)_3 \cdot 2/n\ S^{n\ominus} \quad \text{oder}$$

$$\sim\sim\sim\sim\sim\sim-\overset{\oplus}{N}H_2CH_2C(CH_3)_2-CH_2-\overset{\oplus}{N}H_3 \cdot 2/n\ S^{n\ominus}$$

enthalten.

Die erfindungsgemäß benötigten Ausgangspolymeren mit Diaminendgruppen können z.B. gemäß europäischer Patentanmeldung Nr. 86110539 oder Macrom. Chem. Rapid Commun. 3 (1982), Seiten 59 bis 63 hergestellt werden, indem lebende anionische oder mit Alkalimetall metallisierte Homo-, Co-und/oder Blockcopolymere aus Vinylaromaten und/oder Dienen z.B. mit bicyclischen Diaziridinen bzw. difunktionellen Schiff'schen Basen oder Hydrazonen umgesetzt und dann hydrolisiert und gegebenenfalls hydriert werden. Die Polymeren haben die allgemeine Formel:

$$\sim\sim\sim\sim\sim\sim NH-(A)_x-NR^1R^2 \qquad (II)$$

wobei A und $R^1$, $R^2$ und x die eingangs angegebene Bedeutung haben.

Die Herstellung der für die Erfindung benötigten Ausgangspolymeren wird in den genannten Literaturstellen ausführlich beschrieben. Als Vinylaromaten kommen für sie vor allen Dingen Styrol und seine im Kern alkylierten Derivate in Betracht, ferner $\alpha$-Methylstyrol, aber auch andere, seltener benutzte Vinylaromaten. Als Diene sind vor allen Dingen geeignet Butadien, Isopren, 2,3-Dimethylbutadien und Pentadien-1,3.

Um einen besonders guten erfindungsgemäßen Effekt zu erzielen, sollen bevorzugt mehr als 50 Mol.%, insbesondere 60 bis 100 Mol.% der Polymermoleküle endständige Basenstickstoffgruppen, wie sie oben beschrieben sind, tragen. Geeignet sind nur solche Polymerenden, die jeweils zwei basische Stickstoffatome oder mehr, wie oben formuliert, enthalten.

Als Gegenionen für die Bildung der Ammoniumsalze sind alle denkbaren anorganischen und organischen Säuren geeignet, sofern sie ausreichend dissoziieren. Bei mehrbasischen Säuren zeigen auch mittelstarke Säuren sehr gute Wirkung im Sinne der Erfindung. Außerdem ist Unverträglichkeit der Säuren mit dem unpolaren Teil der Polymeren von Vorteil. Die folgende Aufzählung gibt Beispiele für geeignete Säuren, ohne jedoch vollständig zu sein: HCl, HBr, HJ, $HClO_4$, $HBrO_4$, $H_2SO_4$, $H_2SO_3$, $H_3PO_4$, $H_4P_2O_7$, Polyphosphorsäuren, $H_3PO_3$, $H_2SeO_4$, $H_3AsO_4$. Weniger geeignet sind hingegen Kohlensäure, Kieselsäure und andere schwache Säuren. Ebenfalls wenig geeignet sind stark oxidierende Säuren wie $HNO_3$, $HClO_3$, $HClO_2$, usw. Als organische Säuren kommen in Betracht Mono-und Polycarbonsäuren, wobei hier insbesondere mehrbasische und solche mit hohen Dissoziationskonstanten geeignet sind. Beispiele sind: Oxalsäure, Bernsteinsäure, Maleinsäure, Zitronensäure, Weinsäure, Ascorbinsäure, Benzoesäure, Isophthalsäure, Terephthalsäure, Trimesinsäure, Mono-und Polysulfonsäuren und Carbonsulfonsäuren von Aromaten und Aliphaten wie z.B. Benzol-, Toluol-, Naphthalinsulfonsäuren, Polysulfonsäuren von ein-und mehrkernigen Aromaten, $\beta$-Sulfopropionsäure, Sulfobenzoesäuren, Phosphonsäuren, usw. Ferner Harnsäure, Trifluoressigsäure, Mono-, Di-und Trichloressigsäure, Trifluormethansulfonsäure, usw. Ferner Acrylsäure, Methacrylsäure, usw. Geeignet sind ferner auch Carboxyl-oder Sulfonsäuregruppen enthaltende Polymere wie Polyvinylswulfonsäure, Polyacrylsäure, Polymethacrylsäure, sowie Copolymere dieser Säuren sowie von Maleinsäure und Fumarsäure mit sich sowie anderen Comonomeren. Weniger geeignet sind Essigsäure und andere schwache aliphatische Monocarbonsäuren. Es kommen wenigstens 0,7 Mol Säure je Mol der in den Polymeren enthaltenden Aminendgruppen zur Anwendung. Bei geringeren Mengen werden die modifizierten Eigenschaften durch Ionisierung der Polymeren nicht voll entwickelt. Überraschenderweise werden

von den Polymeren jedoch weit größere Mengen an Säuren aufgenommen als der Äquivalenz entspricht, ohne daß es zu einer Phasentrennung kommt. So sind z.B. die 3-und 5-wertigen Säuren des Phosphors völlig unverträglich mit Polystyrol und Polybutadien, trotzdem werden von den erfindungsgemäßen Polymeren große Mengen Säure ohne Ausbildung einer eigenen Phase aufgenommen.

Die zusätzlichen über den Äquivalenzpunkt hinaus aufgenommenen Säuremengen führen zu einer Verstärkung der Aggregation der kationischen Kettenenden, wobei schließlich bei mehrfachem Überschuß über der Äquivalenz ein Eigenschaftsplateau erreicht wird. Es ist daher im allgemeinen nicht sinnvoll, einen Überschuß zu verwenden, der über dem sechsfachen der Äquivalenz liegt.

Die Säuren sind auch bei großem Überschuß überraschend gut an die Polymeren gebunden. So wird der Säuregehalt z.B. durch Fällen der Polymeren aus ihren Lösungen mit Alkoholen oder durch Waschen der Polymerlösungen in Kohlenwasserstoffen mit Wasser nur wenig verändert. Erst durch Zugabe von Alkalihydroxiden oder Aminen wird die Kationisierung der Endgruppen rückgängig gemacht.

Die Säuren können z.B. zur Lösung der Polymeren zugegeben werden, bevor diese aufgearbeitet werden, z.B. in Form ihrer konzentrierten wäßrigen Lösungen oder in Tetrahydrofuran. Schlecht lösliche Säuren können auch in Form ihrer Suspension in Kohlenwasserstoffen eingearbeitet werden. Diese Form der Zugabe ist besonders für viele organische Säuren geeignet wie Terephthalsäure, Trimesinsäure, Oxalsäure, Fumarsäure und andere. Zweckmäßig ist es in diesem Falle, zunächst eine feinteilige Suspension der Säuren herzustellen, z.B. durch Vermahlung der Säure mit Kohlenwasserstoff in einer Kugelmühle oder mit einem Ultraturrax.

Die Säuren können auch nach der Isolierung der Polymeren eingemischt werden. Die Einmischung in die Polymerschmelze kann z.B. im Extruder oder im Kneter erfolgen, wobei eine teilweise Bildung von Säureamiden stattfinden kann. Die Bedingungen sind so zu wählen, daß optimale Eigenschaftskombinationen erreicht werden. Auch die durch partielle Amidbildung entstehenden Produkte sind Gegenstand dieser Erfindung. Um eine Zersetzung der Polymeren oder ein Korrosion der Verarbeitungsmaschinen auszuschließen, kann es zweckmäßig sein, die Säuren zuvor in geeigneten Polymeren zu verdünnen oder zu suspendieren.

Soll die Bildung von Amidgruppen z.B. bei der Verarbeitung von Formmassen bei hohen Temperaturen vermieden werden, so sind stark dissoziierende Säuren besonders gut geeignet, z.B. HCl, $HClO_4$, Trifluormethansulfonsäure, um einige zu nennen.

An Stelle der freien Säuren kann man auch ihre Ammoniumsalze in sehr konzentrierter Lösung in Wasser, Tetrahydrofuran oder einem anderen geeigneten Lösungsmittel zusetzen. In diesem Falle muß der freigesetzte Ammoniak z.B. durch Verdampfen eines Teiles des Lösungsmittels ausgetrieben werden. Diese Art der Zugabe ist besonders schonend.

An Stelle von freien Säuren oder ihrer Ammoniumsalze ist es, weniger bevorzugt, auch möglich, die Kationisierung der Aminendgruppen mit Alkylierungsmitteln vorzunehmen, z.B. mit Dimethylsulfat, Methyliodid, Toluolmethylsulfonat, Benzylchlorid, Alkylchlorid und anderen. In diesem Falle kann jedoch eine längere Reaktionszeit bei erhöhter Temperatur und großer Überschuß an Alkylierungsmitteln erforderlich sein, um die Umsetzung vollständig zu machen.

An Stelle einer Säure kann man natürlich auch eine Mischung verschiedener Säuren für die Kationisierung der Polmeren verwenden. So wurde gefunden, daß unter Mitverwendung von $SO_2$ besonders helle Umsetzungsprodukte erhalten werden. In welcher Form dieses seine Wirkung entfaltet, kann nur vermutet werden. Es wird angenommen, daß es sich an die von der Herstellung der Polymeren enthaltenen Aldehyde oder Ketone anlagert und als $\alpha$-Oxysulfonsäure bzw. deren Kondensationsprodukt mit den Aminogruppen wirksam wird.

Außer Schwefeldioxid wurden im Sinne einer Aufhellung der Farbe noch andere Additive als wirksam gefunden. So zeigen Harnstoff und seine Derivate, sofern sie noch mindestens ein freies Wasserstoff enthalten, gute Wirkung. Gut geeignet in diesem Sinne ist außerdem der Zusatz von geringen Mengen Aluminiumalkylen oder Hydriden, ferner auch Borhydrid.

Die Kationisierung der Aminendgruppen bewirkt trotz ihres gewichtsmäßig geringen Anteils am Gesamtmolekül eine starke Veränderung der physikalischen Eigenschaften. Es wird angenommen, daß dies auf eine Aggregation der kationischen Kettenenden zurückzuführen ist. So wurden unter anderem beobachtet:

-eine Erhöhung der Lösungsviskosität, die in Abhängigkeit von der zugesetzten Säuremenge bis auf einen Wert ansteigt, der etwa dem sechsMolekulargewicht des nichtionisierten Ausgangspolymeren entspricht.

-Polymere, die an beiden Kettenenden kationische Ladungen tragen, bilden auch bei niedrigen Konzentrationen ein Gel, besonders ausgeprägt in unpolaren Lösungsmitteln.

-Polydiene mit einem oder besser noch mit zwei kationischen Kettenenden zeigen einen stark verringerten oder keinen "kalten Fluß", eine Kautschukeigenschaft, die für das "Handling" nicht vulkanisierter Rohware von Bedeutung ist.

-Zwei-Blockcopolymere des Typs Polystyrol →Polydien →kationische Endgruppe mit überwiegendem Dienanteil ähneln in ihren Eigenschaften Drei-Blockcopolymeren vom Typ Styrol-Dien-Styrol, sind jedoch leichter verarbeitbar als diese.

-Formmassen aus Polystyrol oder überwiegenden Mengen Polyvinylbenzol mit kurzen Dienblöcken besitzen im Vergleich zu nichtmodifizierten Polymeren gleicher Zusammensetzung und gleichen Molgewichtes ein deutlich höheres mechanisches Eigenschaftsniveau.

Alle erfindungsgemäßen Polymeren weisen zu den meisten matallischen polaren und unpolaren Oberflächen eine ungewöhnlich hohe Adhäsion auf, weshalb sie als Klebstoffe bzw. Haftvermittler in Lösung oder Substanz geeignet sind.

Diese Aufzählung der Vorteile von mit kationischen Endgruppen modifizierten Polymeren ist nicht umfassend, sie soll nur den Fortschritt der erfindungsgemäßen Formmassen deutlich machen.

Die Erfindung wird durch die folgenden Beispiele erläutert. Die benutzten Ausgangspolymeren wurden nach der folgenden algemeinen Rezeptur hergestellt, alle Prozentangaben sind Gewichtsprozent:

Als Reaktor dient ein mit Rührer, mit Sole von -30°C betriebenem Rückflußkühler, einem kalibrierten, ebenfalls mit Rückflußkühler versehenem Tropftrichter, einem mit einer Gummikappe verschlossenen Stutzen sowie einer Reinstickstoffspülung versehener 10 l-Glaskolben mit Heiz-bzw. Kühlmantel. Der Stickstoff wird durch Waschen mit einer Mischung von 2 Gew.% Lithiumbutyl (sec.-Butyllithium) in einem Weißöl von Spuren von Feuchtigkeit und Sauerstoff befreit. Der Kolben wird zunächst mit einer Lösung von Lithiumbutyl in Cyclohexan, der etwas Styrol zugesetzt wurde ausgekocht. Die als Indikator für die Aktivität dienende orange Farbe der Lösung muß bis zum Schluß vorhanden sein. Die Lösung wird abgezogen und der Kessel mit Cyclohexan befüllt, das zuvor über eine Säule mit Molekularsieb gereinigt wurde. Die Menge wird so bemessen, daß am Ende eine Lösung mit 20 Gew.% Feststoff vorliegt. Falls Styrol polymerisiert werden soll, wird dieses zuvor ebenfalls durch Molekularsieb von Verunreinigungen befreit. Die danach noch vorhandenen Verunreinigungen werden bei 40°C mit Lithiumbutyl durch die Gummikappe mit einer kalibrierten Spritze bis zum Auftreten eines geringen Orangetones austitriert. Sofort darauf wird die für die Polymerisation benötigte berechnete Menge an Lithiumbutyl zugegeben und das Styrol auspolymerisiert. Sodann werden die anderen Monomeren in der vorgesehenen Reihenfolge zugegeben und unter Kühlung bei 70°C nicht überschreitender Temperatur auspolymerisiert. Nun wird auf 40 bis 45°C abgekühlt und zur Einführung der endständigen Aminogruppen mit Diaziridinen oder mit Schiff'schen Base in einer Menge von 110 Gew.% der Theorie mittels einer kalibrierten Spritze abgebrochen. Nach einer Stunde wird unter intensivem Rühren die gewünschte Säure gegebenenfalls in mehreren Portionen zugesetzt. Das Polymer wird durch Einrühren der Polymerlösung in das 4-fache Volumen Ethanol gefällt, das Polymer mit Alkohol, dem 0,5 Gew.% Ditertiärbutyl-p-kresol als Stabilisator zugesetzt wurde, von Hand (Gummihandschuhe!) ausgeknetet und im Vakuumtrockenschrank bei 80°C und 2 mb über Nacht getrocknet.

Wird für das Polymer kein Styrol benötigt, so wird auf die Titration mit Lithiumbutyl verzichtet und das Molekulargewicht durch empirische Versuche eingestellt. Als Regel sollte das für die Vernichtung der Verunreinigungen benötigte Lithiumbutyl 10 Gew.% der für die Polymerisation benötigten Menge nicht überschreiten.

Die Polymeren wurden durch die folgenden analytischen Methoden charakterisiert:

Zur Bestimmung des Molekulargewichts wird vor der Modifizierung mit Diaziridin mit einer Spritze eine Probe aus dem Reaktor entnommen, mit Alkohol gefällt und im Vakuum getrocknet. An einer Lösung in Tetrahydrofuran wird die Molekulargewichtsverteilung durch Gelpermeationschromatographie (GPC) mit einem Gerät der Fa. Waters, ausgerüstet mit UV-und Brechungsindexdetektoren, ermittelt. Das Molekulargewicht (MGW) wird an Eichkurven, die mit engverteilten Standardpolymeren geeicht wurden, abgelesen. Bei Blockcopolymeren wurde für das MGW empirisch das der Zusammensetzung entsprechende Mittel zwischen den Eichkurven der beiden Homopolymeren zu Grunde gelegt. Eine Messung des GPC an den modifizierten Polymeren ist wegen der polaren Endgruppe nicht möglich. Gesamtstickstoff wurde nach Kjeldahl, Basenstickstoff durch potentiometrische Titration der Lösung der Polymeren in Dichlorbenzol/Eisessig mit 0,1 n-Perchlorsäure bestimmt.

Die Viskositätszahl (VZ) wurde bei 25°C in Toluol (0,5 g Polymer in 120 $cm^3$ Toluol) gemäß DIN 51 562 bestimmt.

Die mechanischen Daten (Zugfestigkit bei 300 % Dehnung, Reißfestigkeit und Reißdehnung) wurden bestimmt an Prüfkörpern von 2,5 mm Stärke, die nach DIN 53 455 aus zwischen Teflonscheiben gepreßten Platten ausgestanzt wurden.

Beispiel 1 bis 16

Für die folgenden Beispiele wurden engverteilte Blockcopolymere Polystyrol - Polybutadien - NH - $(CH_2)_3$-$NH_2$ -hergestellt durch Abbruch der anionischen lebenden Polymeren mit 1,5-Diaza-bicyclo-[3,1,0]-hexan - mit den angegebenen Molekulargewichten, bestimmt durch Gelpermeationschromatographie (GPC), und Zusammensetzungen verwendet. Sie wurden in Lösung in Cyclohexan mit den in den Tabellen angegebenen Mengen verschiedener Säuren versetzt, mit Alkohol gefällt, im Vakuum von 2 mb bei 50°C 24 Stunden getrocknet und analysiert. Außer den in den Tabellen angegebenen Daten wurde bei den Polymeren der Beispiele 5, 10, 11 und 15 die Wirkung als Haftvermittlr geprüft, indem Aluminiumfolien von 0,05 mm Stärke bei 150°C in einer Presse mit den genannten Polymeren so verpreßt wurden, daß eine Verbindungsschicht von 0,05 bis 0,2 mm entstand. Die beiden Aluminiumfolien ließen sich mechanisch nicht mehr voneinander trennen. Gegebenenfalls trat nur ein Zerreißen der Aluminiumfolie auf.

| Beispiel Nr. | Polymer Zusammensetzung in Gew.% | MGW | Zusätze (Mol/Mol Polymer) Säure | Menge | Sonstiges | Menge | VZ | Eigenschaften Zugfestigkeit 300 % $N/mm^2$ | Reißdehnung % | Reißfestigkeit $N/mm^2$ |
|---|---|---|---|---|---|---|---|---|---|---|
| Vergleich | 17 % PS- 83 % PBu $-NH(CH_2)_3NH_2$ | 60000 | - | - | - | - | 78 | - | - | - |
| 1 | " | " | HCl | 1 | - | - | 94 | 0,67 | 734 | 0,99 |
| 2 | " | " | HCl | 1,5 | - | - | 108 | 1,19 | 526 | 2,31 |
| 3 | " | " | HCl | 2 | - | - | 138 | 1,30 | 719 | 3,15 |
| 4 | " | " | o-Sulfobenzoesäure | 1 | - | - | 134,5 | 1,22 | 1048 | 3,58 |
| 5 | " | " | Oxalsäure | 4 | - | - | 127 | 1,14 | 588 | 1,88 |
| 6 | " | " | - | - | Dimethylsulfat | 2 | 104 | 0,7 | 872 | 1,60 |
| Vergleich | 17 % PS- 83 % PBu $-NH(CH_2)_3NH_2$ | 65000 | - | - | - | - | 80,2 | - | - | - |
| 7 | " | " | $H_3PO_4$ | 1 | - | - | 97 | 0,4 | 653 | 0,43 |
| 8 | " | " | " | 2 | - | - | 137 | 1,14 | 821 | 1,38 |
| 9 | " | " | " | 3 | - | - | 159 | 1,46 | 430 | 1,53 |
| 10 | " | " | " | 4 | - | - | 178 | 1,68 | 368 | 1,88 |
| 11 | " | " | Trimesinsäure | 1 | | | 178 | 1,05 | 902 | 2,92 |

PS = Polystyrol

PBu = Polybutadien

VZ = Viskositätszahl

| Beispiel Nr. | Polymer Zusammensetzung in Gew.% | MGW | Zusätze (Mol/Mol Polymer) Säure | Menge | Sonstiges | Menge | VZ | Eigenschaften Zugfestigkeit 300 % N/mm² | Reißdehnung % | Reißfestigkeit N/mm² |
|---|---|---|---|---|---|---|---|---|---|---|
| Vergleich | 9 % PS- 91 % PBu -NH(CH₂)₃NH₂ | 80000 | - | - | - | - | 105 | - | - | - |
| 12 | " | " | - | - | Al(Et)₃<br>Ethylenharnstoff | 0,05<br>0,5 | 109 | - | - | - |
| 13 | " | " | Oxalsäure | 2 | Al(Et)₃<br>Ethylenharnstoff | 0,05<br>0,5 | 184 | 0,89 | 837 | 1,09 |
| 14 | " | " | $H_3PO_3$ | 4 | Al(Et)₃<br>Ethylenharnstoff | 0,05<br>0,5 | 182 | - | 286 | 0,80 |
| Vergleich | 9 % PS- 91 % PBu -NH(CH₂)₃NH₂ | " | - | - | - | - | 103,4 | - | - | - |
| 15 | " | " | Oxalsäure | 2 | Ethylenharnstoff<br>$SO_2$<br>Al(Et)₃ | 0,5<br>2<br>0,05 | 227 | 1,22 | 1110 | 3,22 |
| 16 | " | " | $H_3PO_4$ | 4 | Ethylenharnstoff<br>$SO_2$<br>Al(Et)₃ | 0,5<br>2<br>0,05 | 224 | 1,26 | 1088 | 3,35 |

Beispiel 17

Herstellung eines Polybutadiens mit kationischer Endgruppe

In einen 5 l-Edelstahlkessel werden unter Stickstoffatmosphäre drei Liter gereinigtes und getrocknetes Cyclohexan eingefüllt und dann wird 500 g Butadien zugegeben, das zuvor zur Reinigung über Lithiumbutyl destilliert wurde. Die Mischung wird auf 40°C erwärmt und die Polymerisation durch Zugabe von 6,3 mMol Lithiumbutyl in Gang gesetzt. Bei 65 bis 70°C wird in 3 Stunden auspolymerisiert, dann die Reaktionsmischung auf 40°C abgekühlt und eine Probe entnommen. An dieser wird mittels GPC ein MGW von 83000 gemessen. Nun werden 7 mMol 1,5-Diaza-bicyclo-[3,1,0]-hexan

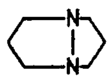

zugesetzt, um eine 1,3-Diaminopropylendgruppe an das Polymermolekül anzuhängen. Nach einer Stunde wird eine Probe entnommen. Die Bestimmung des Stickstoffgehaltes nach Kjehldahl ergibt einen Wert von 0,035 Gew.% (Theorie 0,034 Gew.% für MGW 83000). Eine Hälfte des Ansatzes wird nacheinander mit 3,5 mMol Ethylenharnstoff, 7 mMol $SO_2$ und 7 mMol Oxalsäure, gelöst in Tetrahydrofuran, versetzt und dann durch Eingießen in Ethanol gefällt. Die andere Hälfte des Ansatzes wird ohne Zusätze gefällt. Die beiden Produkte werden mit frischem Ethanol ausgeknetet und bei 80°C im Vakuum getrocknet.

Der Vergleich des kalten Flusses der beiden Kautschukproben, die sich nur durch die Zusätze unterscheiden, zeigt das folgende Experiment:

Aus den beiden Polymeren werden Kugeln von je 20 g geformt, diese auf Glasplatten gelegt und bei Zimmertemperatur die mit der Zeit wachsende Fläche bestimmt, die von den auseinanderfließenden Kugeln bedeckt wird.

| Zeit Min. | Fläche ($cm^2$) Vergleichs-kautschuk | Fläche ($cm^2$) kationisierten Kautschuks |
|---|---|---|
| 0 | 8 | 7 |
| 15 | 20 | 7,5 |
| 60 | 22 | 8 |
| 300 | 44 | 11 |
| 1440 | 62 | 15 |
| 5760 | 71 | 17 |

Beispiele 18 bis 20

In den folgenden Beispielen wird die Herstellung von glasklaren, schlagzähen Blockcopolymerisaten mit kationischen Endgruppen mit a) 25 Gew.% (Beispiel 18), b) 15 Gew.% (Beispiel 19) und c) 10 Gew.% (Beispiel 20) Butadiengehalt beschrieben. Die jeweiligen Mengen an Reaktanten sind entsprechend gekennzeichnet.

In einem 10 l-Kessel werden 5390 $cm^3$ Cyclohexan und a) 642 g, b) 733 g, c) 775 g Styrol vorgelegt und bei 40°C unter Inertgas mit einer 1,5 gew.%igen Butyllithiumlösung bis zum Auftreten einer schwachen Orangefarbe austitriert. Anschließend werden 3,6 mMol Butyllithium als molare Lösung in Hexan zugegeben und bei 60°C innerhalb einer Stunde auspolymerisiert. Zu den Lösungen werden erneut a) 18 mMol Butyllithium zugegeben, anschließend a) 389 g, b) 448 g, c) 474 g Styrol zugesetzt und auspolymerisiert. Dann wurde ein Gemisch von a) 214 g Styrol und 426 g Butadien, b) 245 g Styrol und 252 g Butadien und c) 260 g Styrol und 168 g Butadien zugesetzt und wiederum bei 60 bis 70°C bis zur vollständigen Umsetzung polymerisiert. Die Viskositätszahl in Toluol betrug a) 82, b) 72, c) 71. Nach Abkühlen auf 40°C wurden a) 2 g 1,5-Diaza-bicyclo-[3,1,0]-hexan zugesetzt. Nach einer Stunde werden je 1,02 g Ethylenharnstoff zugesetzt, dann, in Tetrahydrofuran gelöst, eine Mischung aus 2,6 mMol $SO_2$, 13,5 mMol Phosphorsäure, 40,5 mMol Oxalsäure. Die Blockcopolymeren wurden unter intensivem Rühren durch Eingießen in 20 l Methanol gefällt und im Vakuum getrocknet. Die Eigenschaften sind der folgenden Tabelle zu entnehmen.

| Beispiel | Zusammensetzung Gew.% St | Gew.% Bu | VZ nach Polymer $cm^3/g$ | VZ-Endprodukt $cm^3$ | Zugversuche | | | Adhäsionskraft $kJ/m^2$ |
|---|---|---|---|---|---|---|---|---|
| 18 | 75 | 25 | 82 | 96 | 20 | 24 | 360 | 60 |
| 19 | 85 | 15 | 77 | 88 | 33 | 26 | 270 | 25 |
| 20 | 90 | 10 | 71 | 83 | 40 | 27 | 55 | 8 |

Zugversuche: 1. Spalte Zugfestigkeit, 2. Spalte Reißfestigkeit, 3. Spalte Reißdehnung

## Ansprüche

1. Homopolymere oder Blockcopolymere aus Vinylaromaten und/oder Dienen und deren hydrierte Derivate, dadurch gekennzeichnet, daß sie Endgruppen der allgemeinen Formel (I) enthalten:

$$\sim\sim\sim\sim\sim\sim\sim\sim- NH-(A)_X-NR^1R^2 \cdot n\ H_mS \quad , \qquad (I)$$

worin A = eine gegebenenfalls substituierte Brücke, die außer Kohlenstoff zusätzlich Stickstoff-oder Sauerstoffglieder enthalten kann, X = 0 oder 1, S = ein anorganischer oder organischer Säurerest, n = eine ganze Zahl zwischen 1 und 12, welche die Zahl der verwendeten Mole Säure je Kettenende angibt, $R^1$ und $R^2$ = Wasserstoff, aliphatische oder aromatische Reste oder eine Brücke mit 3 bis 12, gegebenenfalls durch aliphatische oder aromatische Reste substituierten Kohlenstoffgliedern und m = Zahl der Wasserstofionen der verwendeten Säure.

2. Polymere nach Anspruch 1, dadurch gekennzeichnet , daß mehr als 50 Mol.% der Polymermoleküle die Endgruppen (I) enthalten.

3. Polymere nach Anspruch 1, dadurch gekennzeichnet, daß die Brücke A eine gegebenenfalls substituierte Kohlenwasserstoffbrücke ist.

4. Polymere nach Anspruch 1, dadurch gekennzeichnet, daß die Brücke A eine gegebenenfalls substituierte Polymethylenbrücke mit 2 bis 12 $CH_2$-Gruppen, eine cycloaliphatische Brücke oder eine Phenylenbrücke ist.

5. Polymere nach Anspruch 1, dadurch gekennzeichnet, daß die Brücke A Methyl-, Ethyl-, Phenyl-oder Alkylidenaminogruppen als Substituenten enthält.

6. Polymere nach Anspruch 1, dadurch gekennzeichnet, daß die Reste $R^1$ und $R^2$ Wasserstoff, $C_1$-bis $C_4$-Alkyl-und/oder Phenylreste sowie eine aus drei oder vier Kohlenstoffgliedern zusammengesetzte, gegebenenfalls phenyl-oder $C_1$-bis $C_4$-alkylsubstituierte Brücken sind.

7. Polymere nach Anspruch 1, dadurch gekennzeichnet, daß sie die Endgruppen

$$\sim\sim\sim\sim\sim\sim\sim\sim-NH-(CH_2)_3-\overset{\oplus}{N}H_3 \cdot 1/n\ S^{n\ominus} \quad ,$$

$$\sim\sim\sim\sim\sim\sim\sim\sim-\overset{\oplus}{N}H_2(CH_2)_2\overset{\oplus}{N}(CH_3)_3 \cdot 2/n\ S^{n\ominus} \qquad \text{oder}$$

$$\sim\sim\sim\sim\sim\sim\sim\sim-\overset{\oplus}{N}H_2CH_2C(CH_3)_2-CH_2-\overset{\oplus}{N}H_3 \cdot 2/n\ S^{n\ominus}$$

enthalten.

8. Verfahren zur Herstellung von Polymeren nach Anspruch 1, dadurch gekennzeichnet, daß man Polymere mit Aminoendgruppen der allgemeinen Formel (II):

$$\sim\sim\sim NH-(A)_x-NR^1R^2 \qquad (II)$$

in denen $R^1$, $R^2$, A und x die oben angegebene Bedeutung haben, mit 1 bis 12 Mol einer anorganischen oder organischen Säure umsetzt.

9. Verfahren zur Herstellung von Polymeren nach Ansprüchen 1 und 8, dadurch gekennzeichnet, daß man die Polymeren (II) zusätzlich mit 1 bis 2 Mol Schwefeldioxid, 0,5 bis 2 Mol eines Harnstoffes und/oder 0,05 bis 0,2 Mol Aluminiumalkyl, Aluminiumalkylhydrid und/oder Borhydrid versetzt.

10. Verwendung der Polymeren nach Anspruch 1 als Formmassen, zur Modifizierung thermoplastischer Massen oder vulkanisierbarer Massen.

11. Verwendung der Polymeren nach Anspruch 1 als Klebstoffe.